# FASCICULE DE BREVET EUROPEEN

(11) **EP 0 810 496 B1**
(45) Date de publication et mention de la délivrance du brevet: **04.07.2001**
(21) Numéro de dépôt: 97401203.1
(22) Date de dépôt: 30.05.1997
(51) Int. Cl.: G05D 1/03

(54) **Procédé et dispositif d'identification et de localisation d'objets fixes le long d'un trajet**
Verfahren und Vorrichtung zur Identifikation und Ortsbestimmung von festen Objekten entlang eine Strecke
Method and device for the identification and localisation of fixed objects along a path

(30) Priorité: 31.05.1996 FR 9606749
(43) Date de publication de la demande: 03.12.1997
(73) Titulaire: SAGEM S.A., 75016 Paris (FR); COMMISSARIAT A L'ENERGIE ATOMIQUE, 75015 Paris Cédex 15 (FR)
(72) Inventeur: De Cremiers, Michel, 75116 Paris (FR); Salle, Stéphane, 95000 Neuville-sur-Oise (FR); Arnoul, Patrick, 91940 Les Ulis (FR); Guerin, Jean-Pierre, 91400 Orsay (FR); Viala, Marc, 78280 Guyancourt (FR)
(74) Mandataire: Fort, Jacques

(56) Documents cités:
- WO-A-95/32483
- FR-A- 2 674 354
- PATENT ABSTRACTS OF JAPAN vol. 95, no. 009 & JP 07 244735 A (NEC CORP;OTHERS: 01), 19 septembre 1995,
- PATENT ABSTRACTS OF JAPAN vol. 95, no. 006 & JP 07 162846 A (SUMITOMO ELECTRIC IND LTD), 23 juin 1995,
- PATENT ABSTRACTS OF JAPAN vol. 94, no. 012 & JP 06 348991 A (SUMITOMO ELECTRIC IND LTD), 22 décembre 1994,

## Description

La présente invention concerne les procédés d'identification et de localisation automatique ou semi-automatique d'objets fixes répartis le long du trajet suivi par un véhicule à partir d'images fournies par au moins une caméra fixée sur le véhicule.

L'invention trouve une application particulièrement importante dans le relevé de la position géographique d'objets identifiables par leur forme ou leurs couleurs -tels que des panneaux routiers- disposés le long d'une route parcourue par un véhicule automobile. Elle présente toutefois d'autres applications, telles que le relevé d'objets au sol à partir d'un véhicule aérien, piloté ou non.

On connaît déjà des procédés de relevé de données routières ou urbaines à partir d'un véhicule portant plusieurs caméras permettant d'effectuer une localisation par rapport au véhicule. Ces procédés opèrent par triangulation en utilisant deux images fournies simultanément ou successivement par plusieurs caméras fixées sur un véhicule et une information sur la position et l'orientation du véhicule. Cette information peut être obtenue en combinant les données fournies par une centrale inertielle et par un système de positionnement, par rapport à une constellation de satellites (système GPS).

On pourra notamment trouver une description de tels procédés, aux articles :

"The Ohio State University Highway Mapping System: The Stereo Vision System Component", par Kurt Novak, The Ohio University, Proceedings of the 47th Annual Meeting on Navigation and Exploration .

VISAT : A Mobile City Survey System of High Accuracy, N El-Shemy et al.

VISAT : A real Time System for Highway Spatial Information Acquisition, R. Li, K.P. Schwarz, M.A. Chapman and M. Gravel, Department of Geomatics Engineering, The University of Calgary, Canada. ASPRS/ACSM (1984) pp. 344-349.

L'hybridation GPS-navigation inertielle permet un recalage périodique. La centrale inertielle fournit des indications très précises à court terme sur les translations et rotations du véhicule. La position et l'orientation des caméras dans un trièdre de référence terrestre peuvent ainsi être connues en permanence de façon précise en ayant recours à une hybridation GPS-Navigation inertielle par filtrage de Kalman. Une description du passage des données de localisation d'un objet d'un repère lié au véhicule à un trièdre de référence terrestre et une description du filtrage de Kalman sont données dans des articles des auteurs ci-dessus mentionnés.

Les procédés ci-dessus ont une précision limitée. La localisation de l'objet par stéréoscopie à partir des images fournies simultanément par deux caméras est peu précise du fait de la faible distance entre les deux caméras et des difficultés d'harmonisation parfaite entre elles. Si on utilise une stéréovision à partir de deux images prises pour des positions du véhicule espacées de quelques mètres, la précision reste faible. De plus le pointage manuel du même objet dans les deux images est critique et les erreurs de pointage se cumulent et affectent la mesure de position 3D par triangulation.

La présente invention vise à fournir un procédé répondant mieux que ceux antérieurement connus aux exigences de la pratique, notamment en ce qu'il permet d'atteindre une précision élevée et un bon pouvoir discriminateur.

Dans ce but, l'invention propose un procédé d'identification et de localisation d'objets fixes répartis le long du trajet suivi par un véhicule, suivant la revendication 1.

D'autres caractéristiques sont données dans les sous-revendications.

La caméra ou chaque caméra peut être fixée de façon rigide au véhicule ; elle peut également être reliée au véhicule par l'intermédiaire de moyens d'orientation, équipés d'organes de mesure permettant de mesurer à tout instant la position angulaire, et éventuellement la position en translation, de la caméra par rapport au véhicule.

Le procédé se prête bien à un fonctionnement complètement automatique, mais un fonctionnement semi-automatique avec pointage manuel de chaque objet à localiser dans une seule des images où il apparaît constitue une simplification souvent acceptable pour l'exploitant.

Dans tous les cas, l'exploitation de n images pour mesurer la position de l'objet dans l'espace à trois dimensions, avec un filtrage statistique, permet d'améliorer la précision quand n augmente.

Les objets colorés peuvent être reconnus par reconnaissance de forme et de couleurs, dans une image trichrome. Les autres peuvent être reconnus en illuminant le champ de la caméra, par reconnaissance de forme.

D'autres caractéristiques encore de l'invention apparaîtront mieux à la lecture de la description qui suit de modes particuliers de réalisation donnés à titre d'exemples. La description se réfère aux dessins qui l'accompagent, dans lesquels :
- la figure 1 est un schéma synoptique de principe d'un dispositif permettant de mettre en oeuvre le procédé selon l'invention ;
- la figure 2 est un schéma montrant les paramètres qui interviennent dans la localisation de données routières dans le cas d'une seule caméra ;
- la figure 3 est un schéma fonctionnel de la partie de détection du dispositif de la figure 1 ;
- la figure 4 est un schéma destiné à montrer une constitution possible du dispositif de la figure 1, comportant deux caméras de natures différentes ;
- la figure 5 est un schéma fonctionnel destiné à faire apparaître les étapes de détection mises en oeuvre dans le dispositif du genre montré en figure 3 ;
- la figure 6 est un schéma fonctionnel de l'opération de poursuite qui intervient dans la mise en oeuvre du procédé.

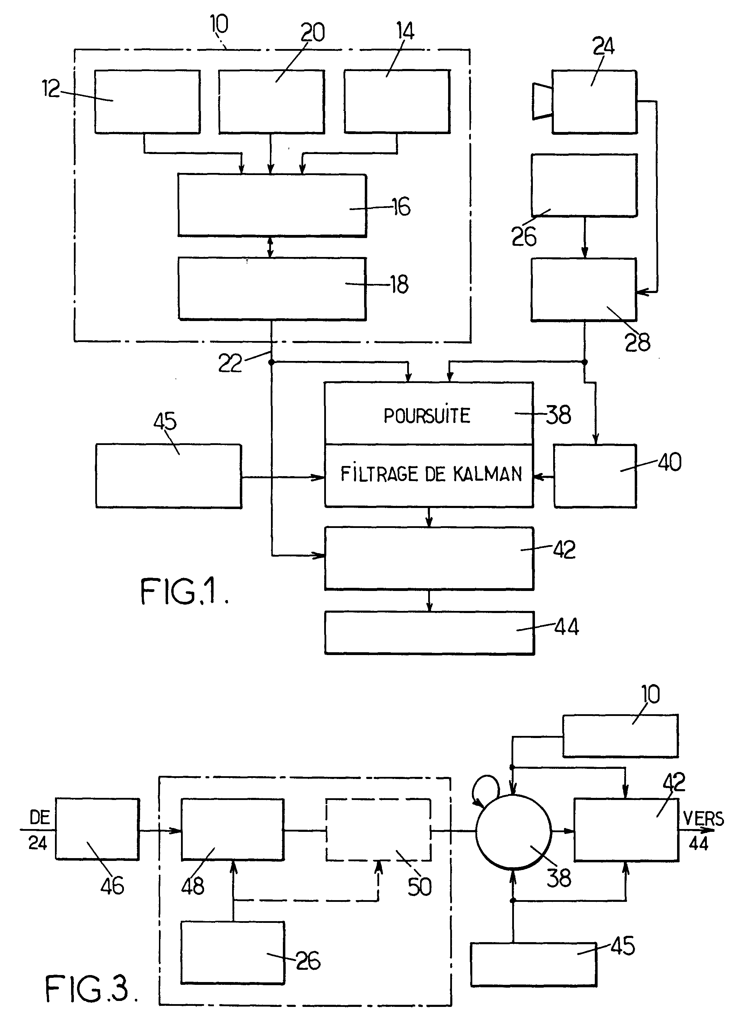

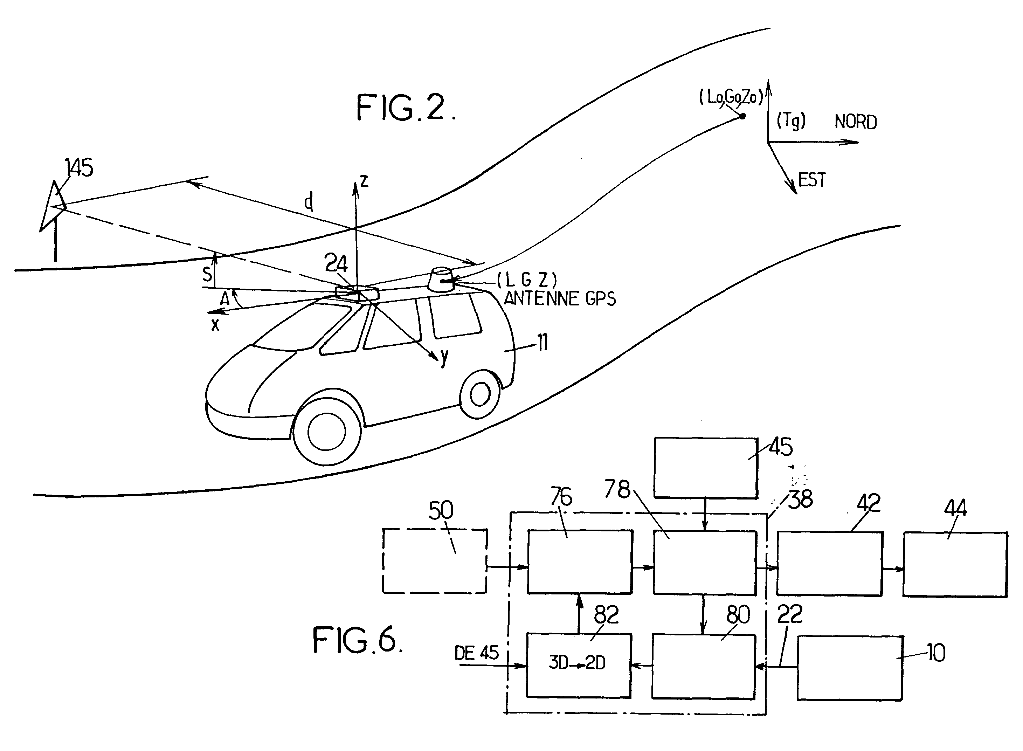

Le dispositif dont le schéma synoptique est montré en figure 1 comprend une centrale de navigation 10 dont la constitution peut être classique ou qui peut, lors de l'utilisation sur un véhicule terrestre 11 (figure 2), être d'un type simplifié, tel que celui décrit dans la demande de brevet FR 96 05783. Classiquement, la centrale de navigation 10 comporte des capteurs inertiels 12 (accéléromètres et gyromètres) et éventuellement un système de localisation 14 par rapport à une constellation de satellites (par exemple le système GPS). Le recours au GPS permet d'effectuer des recalages périodiques de la centrale à inertie pour limiter les dérives inhérentes au système. La centrale comporte alors un logiciel de navigation par hybridation GPS/inertie 16, complété par un logiciel de filtrage de Kalman 18. Le système GPS utilisé peut-être de type différentiel pour augmenter considérablement la précision de localisation si les conditions opératoires le permettent. Les données d'entrée peuvent comporter de plus une mesure des distances parcourues, fournie par un élément 20 tel qu'un odomètre ou un mesureur par effet Doppler. La centrale de navigation 10 fournit en sortie 22 des indications identifiant exactement la position et l'orientation du capteur dans un repère terrestre. Ces indications peuvent par exemple être la latitude L, la longitude G, l'altitude Z et les angles d'attitude de l'axe longitudinal du véhicule dans un trièdre de référence Tg lié à la terre (figure 2).

Lorsque le dispositif est destiné à localiser des panneaux de signalisation routière avec une précision de l'ordre du décimètre, la centrale inertielle doit être du type donnant une précision de quelques pour mille, qui est obtenue à court terme par navigation inertielle et à long terme par le système GPS différentiel, complété par un filtrage de Kalman 18.

Le filtrage de Kalman permet de lisser les données issues de l'hybridation GPS/inertie ; la localisation par GPS seul ne permettrait pas de reconstruire de façon précise la position des objets à identifier à partir du déplacement du véhicule porteur.

Les données apparaissant sur la sortie 22 peuvent être constituées soit par des valeurs absolues, soit par les variations de position et d'attitude du véhicule 11 à partir d'une situation initiale correspondant à une localisation (Lo, Go, Zo) et une orientation initiales du véhicule bien déterminées (figure 2).

Les composants du dispositif destinés à détecter et à identifier les objets recherchés comportent au moins un organe de formation d'image, représentés sur la figure 1 sous forme d'une seule caméra 24, fournissant des images numérisées à une cadence suffisamment élevée pour qu'un même objet à localiser apparaisse dans un nombre d'images supérieur à 2. Un véhicule équipé de plusieurs caméras judicieusement orientées fournira plus aisément ces images pertinentes. Il est souhaitable que l'objet apparaisse dans quatre ou cinq images au moins pour que l'effet d'amélioration de la précision par le filtrage de Kalman se fasse sentir. Un filtrage de Kalman qu'on décrira plus bas n'apporte pas de progrès notable au-delà de dix images pertinentes. Une image peut n'être pas pertinente malgré la prédiction favorable parce qu'il y a une occultation temporaire. Une image peut être non significative parce que l'objet détecté est placé au point d'expansion de l'image pendant le déplacement. Dans le cas où l'on souhaite localiser des panneaux placés en bord de route, une prise de vue à la cadence d'une image à intervalles de 1 à 5 mètres donnera généralement des résultats satisfaisants.

La caméra 24 fournit une image en deux dimensions, ou image 2D, de chaque objet à localiser en trois dimensions dans le repère terrestre (Tg) c'est-à-dire à repérer en 3D.

La détection peut s'effectuer automatiquement par un procédé de reconnaissance de forme et/ou de combinaison de couleurs, par comparaison avec des modèles ou patrons stockés sous forme numérique, en représentation 2D, dans une mémoire-bibliothèque 26. On décrira plus loin plusieurs modes possibles de la détection 28.

Une seconde solution consiste à indiquer manuellement, sur un écran donnant une image fournie par la caméra 24, une représentation qui est estimée représenter un objet à localiser. Le dispositif retrouve ensuite la représentation et confirme l'identification par reconnaissance de forme et/ou de couleurs et par poursuite sur plusieurs images pertinentes.

La détection ou l'indication manuelle fournit simplement une indication d'une représentation en 2D qu'on peut qualifier de "candidate" en ce sens qu'une confirmation de la réalité de la représentation et de sa similitude avec un patron mémorisé doit être obtenue en les trouvant sur plusieurs images successives. Pour cela, le dispositif comporte des moyens de poursuite 38 qui reçoivent d'une part la sortie du détecteur 28, d'autre part des images antérieures. Les moyens de poursuite 38 reçoivent également la sortie 22 de la centrale de navigation 10, qui leur fournit une indication de l'emplacement où la représentation doit être trouvée dans les images suivantes et éventuellement précédentes, si cette représentation est celle d'un objet immobile, à partir de l'emplacement de la représentation dans une image ou des images conservées dans un tampon 40.

La confirmation que la représentation détectée correspond bien à un objet est obtenue et la position de cet objet en trois dimensions est calculée de façon précise par un filtre de Kalman étendu, adapté au modèle non linéaire de la projection perspective 2D/3D. Le filtre de Kalman développé prend non seulement en compte les indications données par les moyens de poursuite 38 sur plusieurs images successives, mais aussi les informations provenant de la centrale de navigation sur les changements de position et d'attitude de la caméra 24 entre les images pertinentes.

Dans un but de simplification, le détecteur 28 et les moyens de poursuite 38 sont généralement prévus pour ne fournir en sortie qu'une indication sur le centre de chaque représentation d'un objet, ce qui fournit le point de référence 2D nécessaire au système.

Les moyens de poursuite à filtrage de Kalman 38 fournissent sur leur sortie des coordonnées représentatives de la position de chaque objet par rapport à la position et l'orientation du véhicule à un instant déterminé. Une solution avantageuse du point de vue du calcul de protection consiste à déterminer, à l'aide des moyens de poursuite, les angles d'azimut A et de site S sous lesquels la caméra 24 voit l'objet, pour une position et une orientation déterminée de cette caméra par rapport au véhicule, ainsi que la distance d entre l'objet et la caméra pour ces mêmes position et attitude. La position et l'orientation de chaque caméra par rapport au véhicule sont celles définies au début de la mission.

Des moyens 42 permettent ensuite d'obtenir, à partir de la sortie des moyens de poursuite 38, les coordonnées absolues, c'est-à-dire les coordonnées en trois dimensions du centre de chacun des objets dans un repère terrestre. Ce calcul utilise les informations fournies à la sortie 22 de la centrale de navigation 10. Il peut de plus utiliser des données de calibration contenues dans une mémoire 45 et obtenues avant la mission. Ces données peuvent être obtenues par des comparaisons entre les images fournies par la caméra et une représentation exacte d'objets ayant une disposition connue de façon précise.

Comme le montre la figure 2, les moyens 42 de calcul des coordonnées absolues 3D permettent d'obtenir la position de chaque panneau 145 dans le repère terrestre (Tg) fixe à partir des données de navigation et des données de localisation du panneau obtenues dans le trièdre de référence T(x,y,z) lié au véhicule, qui peuvent notamment être l'azimut A, le site S et la distance d pour une position particulière du véhicule.

Les coordonnées de chacun des objets reconnus peuvent être mémorisées, avec une indication sur la nature de l'objet, dans une mémoire de masse 44 (figure 1).

Plusieurs objets peuvent être traités simultanément lorsque l'image d'une caméra contient plusieurs représentations des objets à localiser. Ceci est rendu possible par un algorithme d'association de données dans le moyen de poursuite 38 qui permet d'identifier les objets d'une image à l'autre par leur plus grande vraisemblance par rapport à la prédiction.

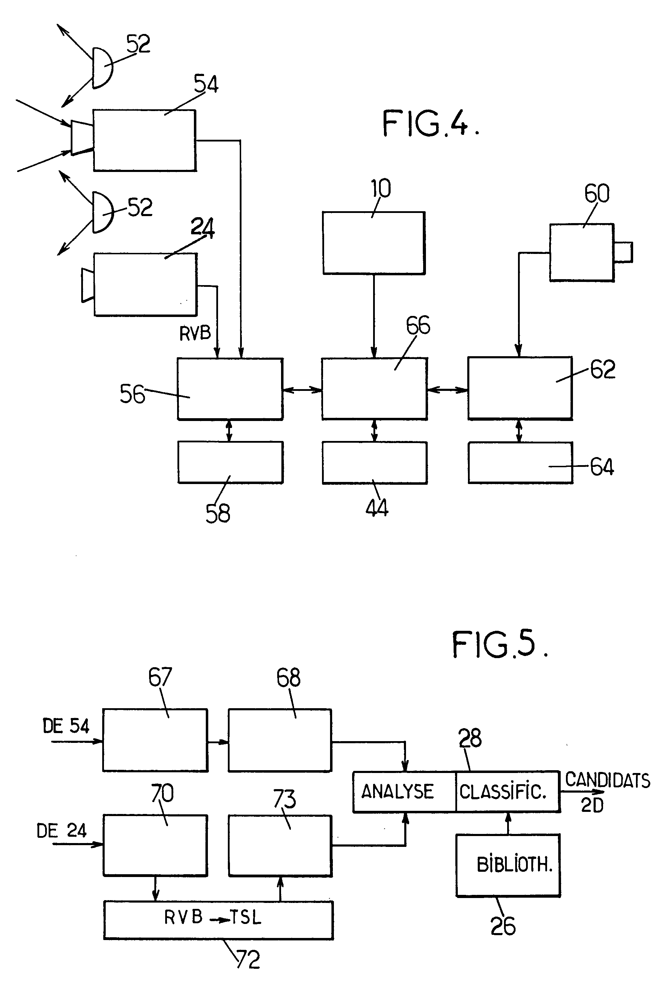

Le schéma fonctionnel de la figure 3 montre les étapes successives qui peuvent intervenir dans la détection, la reconnaissance, et l'estimation de position. Le cas représenté correspond au cas d'objets présentant des zones ayant des couleurs contrastées, permettant d'identifier les objets par reconnaissance de la combinaison de couleurs sur une image trichrome. Les images complètes représentées sous forme numérique sont traitées par segmentation en 46, comme cela sera décrit plus loin en faisant référence à la figure 5. L'opération de reconnaissance donnant naissance à des représentations "candidates" d'objet qui seront ensuite confirmées, s'effectue par analyse 48 avec comparaison avec un faisceau de caractéristiques pour objet à reconnaître, mémorisé dans une bibliothèque 26. Cette première analyse vise simplement à rechercher, dans l'image complète, des éléments caractéristiques des objets.

Afin d'augmenter la probabilité d'un caractère exact de la reconnaissance fondée sur la colorimétrie, avant l'étape de poursuite, une étape d'identification par reconnaissance de forme peut être effectuée en 50, permettant de rejeter les représentations dont l'aspect ne correspond pas à l'un de ceux mémorisés dans une base de données, pouvant être stockée dans la bibliothèque 26.

L'étape de poursuite 38 s'effectue sur la base des représentations en deux dimensions retenues à l'issue de l'étape 48 (ou éventuellement 50). La poursuite, grâce à son algorithme d'association de données, permet d'écarter les représentations qui violent des critères de prédiction et correspondent à des objets mobiles. Le système permet alors d'affiner progressivement la position des objets détectés à partir des données de mesure successives, en accord avec les critères de prédiction. C'est le filtre de Kalman étendu qui est au coeur de cette boucle de prédiction, vérification et estimation.

Le système permet la localisation de chaque objet représenté et retenu, dans un repère à trois dimensions.

La figure 4 montre une implémentation possible du dispositif dans le cas d'un dispositif de relevé de panneaux de signalisation routiers. Certains de ces panneaux comportent une combinaison de couleurs particulière et peuvent être en conséquence identifiés à partir de l'image fournie par une caméra en couleurs 24. En revanche, d'autres panneaux sont simplement réfléchissants. Pour permettre de les identifier, le dispositif de la figure 4 comprend des projecteurs 52 d'illumination du champ d'une caméra 54 fournissant des images dans le proche infrarouge. Les projecteurs émettent eux-mêmes dans le proche infrarouge, de façon à ne pas éblouir les automobilistes venant en sens inverse de la circulation du véhicule. Les informations fournies par les caméras, de type RVB pour la caméra 24, de type noir et blanc avec niveaux de gris pour la caméra 54, sont traitées par une carte image 56 qui peut être une carte MATROX disponible dans le commerce, associée à une mémoire vive 58 de stockage d'images.

Les calculs nécessaires pour le traitement d'images peuvent être effectués par un calculateur 66 de type courant.

Le traitement des images peut être celui montré plus complètement en figure 5.

Les images en niveau de gris fournies par la caméra 54 et mémorisées en 67 sont soumises à une opération de segmentation 68 destinée à répartir l'image en zones identifiées chacune par un niveau de gris. L'opération de segmentation 68 peut même, dans certains cas, conduire à une image binaire, par des opérations de simple seuillage.

Les images fournies par la caméra 24 et mémorisées en 70 sont tout d'abord soumises à une opération 72 de conversion permettant de passer d'une représentation RVB par les trois couleurs de base en une représentation dite TSL (teinte, saturation, luminance), donnant la teinte et la saturation, permettant d'écarter l'effet des variations de luminosité ambiante. L'opération de segmentation ainsi effectuée permet d'obtenir, à la sortie du traitement 73, une représentation des images sous forme binaire.

La détection et la classification sont effectuées en 28 à partir des images ainsi préalablement traitées et fournissent des indications sur des représentations trouvées dans l'image et candidates à constituer l'image des panneaux. Cette opération de détection peut être considérée comme ayant deux étapes successives, à savoir une analyse par zones, permettant de réduire la taille des mémoires nécessaires pour les prédictions ultérieures et la taille de la bibliothèque 26, et une partie de classification.

Pour faciliter l'utilisation ultérieure des données recueillies, le dispositif peut comporter de plus une mémoire d'acquisition 62 et des moyens permettant de provoquer, pour chaque objet identifié, la mémorisation de l'image donnant la meilleure représentation possible du panneau, ce qui permet une identification visuelle ultérieure certaine. La représentation du panneau peut également être obtenue en prévoyant, en plus des moyens ci-dessus définis, une caméra numérique à grande focale 60 qui est déclenchée pour provoquer l'acquisition d'une image par une carte 62 et son stockage dans une mémoire 64 lorsque l'analyse des images fournies par la caméra 24 ou 54 indique que l'objet à localiser se trouve dans le champ. L'image en gros plan ainsi obtenue permet de caractériser le panneau.

La stratégie de poursuite mise en oeuvre dans le dispositif peut être celle schématisée en figure 6. Les données de position 2D des "candidats" sont comparées en 76 aux données de position 2D des objets suivis dans la boucle de prévision qui comprend, pour chaque nouvelle mesure fournie à la sortie de l'étape d'association entre la position 2D de la représentation "candidate" et la position 2D prédite et de calcul de la position en 3D de l'objet représenté :
une étape de remise à jour 78 utilisant les paramètres de calibrage de la caméra et mettant en oeuvre le filtrage de Kalman, une étape de prédiction S0, prenant en compte les changements de position et d'attitude donnés par la centrale inertielle 10,
une étape de projection 82, permettant de repasser de 3D en 2D et utilisant pour cela les paramètres de calibrage de la caméra.

Après un nombre de parcours de boucle suffisant pour que la confirmation soit certaine et pour que la précision de localisation recherchée soit atteinte (sur cinq images successives contenant l'objet par exemple), le résultat est validé en la position de l'objet mémorisé en 44.

La méthode est applicable pour localiser, dans un plan horizontal, des objets verticaux. Dans ce cas, la succession des mesures suivant une direction privilégiée dans les images (axe de l'objet) permet de retrouver la position 2D dans le plan horizontal.

## Revendications

1. Procédé d'identification et de localisation d'objets fixes répartis le long du trajet suivi par un véhicule, à partir d'images fournies par au moins une caméra fixée sur le véhicule, suivant lequel :
on mesure en permanence la position et l'orientation du véhicule dans un repère terrestre,
on reconnaît chaque objet successif à localiser par comparaison du contenu des images avec une bibliothèque mémorisée de représentation des objets ou par pointage de la représentation des objets sur une image,
on calcule la position du dit objet dans le repère terrestre à partir des mesures de position et d'orientation du véhicule aux instants des prises de vue des n images, de la position et l'orientation de la ou des dites caméras par rapport au véhicule et de la position de la représentation de l'objet dans les images
caractérisé en ce que :
- on poursuit chaque objet reconnu dans n images contenant une représentation de l'objet et provenant de la ou des dites caméras (n étant un entier supérieur à 2) par prédiction et vérification tenant compte du déplacement du véhicule, et
- la position du dit objet est calculée en mettant en oeuvre un procédé d'estimation à base de filtrage statistique.

2. Procédé selon la revendication 1, caractérisé en ce que l'on effectue la dite poursuite dans n images fournies par une même caméra.

3. Procédé selon la revendication 1, mettant en oeuvre au moins deux caméras présentant des orientations différentes par rapport au véhicule, caractérisé en ce que l'on effectue la dite poursuite dans n images contenant une représentation de l'objet et provenant des dites caméras présentant des orientations différentes.

4. Procédé selon la revendication 1, 2 ou 3, caractérisé en ce que chaque objet est reconnu par reconnaissance de forme et de couleurs, dans une image trichrome.

5. Procédé selon la revendication 1, 2 ou 3, caractérisé en ce qu'on illumine le champ de la caméra au IR et chaque objet est reconnu par reconnaissance de forme.

6. Procédé selon l'une quelconque des revendications 1 à 5, caractérisé en ce qu'on effectue un filtrage de Kalman dédié à chaque objet lorsque l'image d'une caméra contient plusieurs représentations d'objets à localiser.

7. Procédé selon l'une quelconque des revendications 1 à 6, caractérisé en ce que la mesure de position et d'orientation du véhicule est effectuée par navigation inertielle.

8. Procédé selon la revendication 7, caractérisé en ce que la mesure de position et d'orientation du véhicule met en oeuvre un recalage par rapport à une constellation de satellites.

9. Procédé selon la revendication 8, caractérisé en ce qu'il met en oeuvre un système GPS différentiel.

10. Procédé selon l'une quelconque des revendications précédentes, caractérisé en ce que l'étape de poursuite comporte une boucle de prévision et de vérification comprenant, pour chaque image contenant la représentation d'un même objet à localiser :
une recherche d'association entre la position 2D d'une représentation "candidate" et la position 2D prédite pour cette représentation et un calcul de la position en 3D de l'objet représenté ;
une remise à jour (78) de positions 3D utilisant les paramètres de calibrage de la caméra ou des caméras et mettant en oeuvre le filtrage statistique,
une prédiction prenant en compte les changements de position et d'attitude,
une projection permettant de repasser de 3D en 2D en utilisant des paramètres de calibrage des caméras, fournissant la dite position 2D prédite.

11. Procédé selon la revendication 1, caractérisé en ce qu'on localise en 2D dans un plan horizontal, parmi les objets, des objets verticaux à partir d'informations 1D fournis par les images.

12. Procédé selon l'une quelconque des revendications précédentes, caractérisé en ce que le filtrage statistique est un filtrage de Kalman.

## Patentansprüche

1. Verfahren zur Identifizierung und Lokalisierung von feststehenden, längs des von einem Fahrzeug zurückgelegten Wegs verteilten Objekten anhand von Bildern, welche von mindestens einer an dem Fahrzeug befestigten Kamera bereitgestellt werden, bei welchem Verfahren:
- permanent die Position und Orientierung des Fahrzeugs in einem Erdbezugssystem gemessen werden,
- jedes aufeinanderfolgende zu lokalisierende Objekt durch Vergleich des Inhalts der Bilder mit einer gespeicherten Bibliothek von Objektdarstellungen oder durch Einzeichnen der Objektdarstellung in ein Bild erkannt wird,
- die Position des Objekts in dem Erdbezugssystem anhand von Messungen der Position und Orientierung des Fahrzeugs im Zeitpunkt der Aufnahme von n Bildern, der Position und Orientierung der Kamera(s) relativ zum Fahrzeug und der Position der Objektdarstellung in den Bildern berechnet wird, **dadurch gekennzeichnet**, dass:
- jedes in n Bildern, welche eine Darstellung des Objekts enthalten und von der oder den Kameras stammen (n ist eine ganze Zahl größer als 2), erkannte Objekt durch Prädiktion und Verifikation unter Berücksichtigung der Fahrzeugbewegung verfolgt wird und
- die Position des Objekts mittels eines auf statistischer Filterung beruhenden Schätzverfahrens berechnet wird.

2. Verfahren nach Anspruch 1, dadurch gekennzeichnet, dass die Verfolgung in n Bildern durchgeführt wird, welche von ein und derselben Kamera geliefert werden.

3. Verfahren nach Anspruch 1, bei dem mindestens zwei Kameras mit unterschiedlicher Orientierung gegenüber dem Fahrzeug verwendet werden, dadurch gekennzeichnet, dass die Verfolgung in n Bildern durchgeführt wird, welche eine Darstellung des Objekts enthalten und von den Kameras mit unterschiedlicher Orientierung stammen.

4. Verfahren nach Anspruch 1, 2 oder 3, dadurch gekennzeichnet, dass jedes Objekt durch Form- und Farberkennung in einem Dreifarbenbild erkannt wird.

5. Verfahren nach Anspruch 1, 2 oder 3, dadurch gekennzeichnet, dass das Sehfeld der Kamera IR-ausgeleuchtet wird und jedes Objekt durch Formerkennung erkannt wird.

6. Verfahren nach einem der Ansprüche 1 bis 5, dadurch gekennzeichnet, dass für jedes Objekt eine Kalman-Filterung durchgeführt wird, wenn das Bild einer Kamera mehrere Darstellungen von zu lokalisierenden Objekten enthält.

7. Verfahren nach einem der Ansprüche 1 bis 6, dadurch gekennzeichnet, dass die Positions- und Orientierungsmessung des Fahrzeugs mittels Inertialnavigation durchgeführt wird.

8. Verfahren nach Anspruch 7, dadurch gekennzeichnet, dass die Positions- und Orientierungsmessung des Fahrzeugs eine Überprüfung in Bezug auf eine Satellitenanordnung beinhaltet.

9. Verfahren nach Anspruch 8, dadurch gekennzeichnet, dass es ein differenzielles GPS-System verwendet.

10. Verfahren nach einem der vorhergehenden Ansprüche, dadurch gekennzeichnet, dass der Schritt der Verfolgung eine Vorhersage- und Verifikationsschleife umfasst, welche für jedes Bild, das die Darstellung ein und desselben zu lokalisierenden Objekts enthält, beinhaltet:
- eine Assoziationssuche zwischen der 2D-Position einer "Kandidaten"-Darstellung und der für diese Darstellung vorhergesagten 2D-Position sowie eine Berechnung der 3D-Position des dargestellten Objekts,
- eine Aktualisierung (78) der 3D-Positionen unter Verwendung der Kalibrierungsparameter der Kamera oder Kameras und mittels der statistischen Filterung,
- eine Prädiktion unter Berücksichtigung der Positions- und Stellungsänderungen,
- eine Projektion, welche eine Rückführung von 3D auf 2D erlaubt, unter Verwendung der Kalibrierungsparameter der Kameras, wobei die vorhergesagte 2D-Position bereitgestellt wird.

11. Verfahren nach Anspruch 1, dadurch gekennzeichnet, dass anhand von 1D-Informationen, welche von den Bildern geliefert werden, in einem horizontalen Plan unter den Objekten vertikale Objekte in 2D lokalisiert werden.

12. Verfahren nach einem der vorhergehenden Ansprüche, dadurch gekennzeichnet, dass die statistische Filterung eine Kalman-Filterung ist.

## Claims

1. A method of identifying and locating fixed objects distributed along the path covered by a vehicle, from images delivered by at least one camera fixed on the vehicle, wherein:
the position and the orientation of the vehicle in a terrestrial reference system is continuously measured,
each successive object for location is recognised by comparing the content of the images with a stored library of representations of the objects or by plotting the representation of the objects on an image,
the position of the said object in the terrestrial reference system is calculated from position and orientation measurements of the vehicle at the times of obtaining n images, from the position and orientation of the said camera or cameras with respect to the vehicle and from the position of the representation of the object in the images,
characterised in that:
- each object recognised in n images containing a representation of the object and originating from the said camera or cameras (where n is an integer greater than 2) is tracked by prediction and verification taking into account the movement of the vehicle, and
- the position of the said object is calculated by using an estimation method based on statistical filtration.

2. A method according to claim 1, characterised in that the said tracking is effected in n images delivered by one and the same camera.

3. A method according to claim 1, using at least two cameras having different orientations with respect to the vehicle, characterised in that the said tracking is effected in n images containing a representation of the object and originating from the said cameras having different orientations.

4. A method according to claim 1, 2 or 3, characterised in that each object is recognised by recognition of shape and colours, in a three-colour image.

5. A method according to claim 1, 2 or 3, characterised in that the field of the camera is illuminated with IR and each object is recognised by shape recognition.

6. A method according to any one of claims 1 to 5, characterised in that a Kalman filtration is effected dedicated to each object when the image of a camera contains a plurality of representations of objects for location.

7. A method according to any one of claims 1 to 6, characterised in that measurement of the position and orientation of the vehicle is effected by inertial navigation.

8. A method according to claim 7, characterised in that the position and orientation of the vehicle makes use of resetting with reference to a constellation of satellites.

9. A method according to claim 8, characterised in that it uses a differential GPS system.

10. A method according to any one of the preceding claims, characterised in that the tracking step comprises a forecasting and verification loop comprising, for each image containing the representation of one and the same object to be located:
a search for association between the 2D position of a "candidate" representation and the 2D position predicted for said representation and a calculation of the 3D position of the object represented;
updating (78) of 3D positions using the calibration parameters of the camera or cameras and using statistical filtration,
a prediction taking into account the changes of position and attitude,
a projection allowing changeover from 3D to 2D using calibration parameters of the cameras, delivering the said predicted 2D position.

11. A method according to claim 1, characterised in that, amongst the objects, vertical objects are located in 2D in a horizontal plane from 1D information delivered by the images.

12. A method according to any one of the preceding claims, characterised in that the statistical filtration is a Kalman filtration.
